# EUROPEAN PATENT APPLICATION

(11) **EP 3 553 695 A1**
(43) Date of publication of application: **16.10.2019**
(21) Application number: 18167191.8
(22) Date of filing: 13.04.2018
(51) Int. Cl.: G06K 9/00

(54) **METHOD AND SYSTEM FOR DISPLAYING IMAGE DATA FROM AT LEAST ONE NIGHT VISION CAMERA OF A VEHICLE**

(71) Applicant: Alpine Electronics, Inc., Tokyo (JP)
(72) Inventor: Dhandapani, Subramanian, 70567 Stuttgart (DE)
(74) Representative: Schmitt-Nilson Schraud Waibel Wohlfrom Patentanwälte Partnerschaft mbB

(57) **Abstract**

A method of displaying image data from at least one night vision camera (12) of a vehicle (1) on at least one display device (14) disposed in the vehicle (1) comprises receiving, by a computing device (11), image data (ID1) of at least one first image captured with the at least one night vision camera (12), performing at least one image recognition process on the received image data (ID1) of the at least one first image, and determining at least one parameter set in the at least one image recognition process which is indicative of at least one image property of at least a part of the at least one first image. The computing device (11) then determines from at least one database (43) at least one image feature which is associated with at least one color based on the at least one parameter set, applies the at least one color of the at least one determined image feature to at least one image feature extracted from the at least one first image, and displays the at least one first image with the at least one color applied to the at least one extracted image feature of the at least one first image on the display device (14).

## Description

The present invention relates to a method and system for displaying image data from at least one night vision camera of a vehicle on at least one display device disposed in the vehicle. The invention further relates to a computer program product for performing the method, and to a vehicle comprising such system.

Night vision cameras installed on a vehicle, such as automobiles or cars, are commonly known in the art. For example, known vehicular night vision camera systems employ infrared (IR) camera(s) which capture infrared images within an area of the field of view (FOV) of the infrared camera(s) which are installed, for example, in front of the vehicle's engine. With the aid of such night vision cameras, a vehicular night assistant driving system may be implemented in the vehicle which is capable of assisting the driver during travels at night such that any obstacles may be recognized earlier than without any such driving assist systems or with any conventional driving assist systems employing conventional daylight vision cameras, such as RGB cameras. Existing night vision cameras on a vehicle typically deliver video streams to various display devices for visualization only in grey scale based on the infrared images captured by the respective night vision camera. Because of the grey scale images displayed to the user, such as the driver of the vehicle, there may be the situation that the user cannot identify all relevant features available on those image feeds. As a consequence, the driver may not be able to identify important objects in the provided images, for example due to blurring of features or edges in the grey scaled images. This, however, may decrease driving safety when employing such night vision camera system in a driving assist system.

It is thus an object of the present invention to provide a method and system for displaying image data from at least one night vision camera of a vehicle on a display device disposed in the vehicle which are capable of increasing driving safety.

The invention relates to a method and system for displaying image data from at least one night vision camera of a vehicle on at least one display device disposed in the vehicle according to the appended claims. The invention further relates to a computer program product capable to perform such method, and to a vehicle comprising at least one night vision camera, at least one display device and such system as specified in the appended claims. Embodiments thereof are disclosed herein below and in the dependent claims.

According to an aspect, there is disclosed a method of displaying image data from at least one night vision camera of a vehicle on at least one display device disposed in the vehicle, comprising:
- receiving, by a computing device comprising a processor, image data of at least one first image captured with the at least one night vision camera for displaying on the display device,
- performing, by the computing device, at least one image recognition process on the received image data of the at least one first image,
- determining, by the computing device, at least one parameter set in the at least one image recognition process which is indicative of at least one image property of at least a part of the at least one first image,
- determining, by the computing device, from at least one database at least one image feature which is associated with at least one color based on the at least one parameter set,
- applying, by the computing device, the at least one color of the at least one determined image feature to at least one image feature extracted from the at least one first image, and
- displaying, by the computing device, the at least one first image with the at least one color applied to the at least one extracted image feature of the at least one first image on the display device.

According to another aspect, there is disclosed a system for displaying image data from at least one night vision camera of a vehicle on at least one display device disposed in the vehicle, the system comprising a computing device comprising a processor, wherein the computing device is configured to:
- receive image data of at least one first image captured with the at least one night vision camera for displaying on the display device,
- perform at least one image recognition process on the received image data of the at least one first image,
- determine at least one parameter set in the at least one image recognition process which is indicative of at least one image property of at least a part of the at least one first image,
- determine from at least one database at least one image feature which is associated with at least one color based on the at least one parameter set,
- apply the at least one color of the at least one determined image feature to at least one image feature extracted from the at least one first image, and
- display the at least one first image with the at least one color applied to the at least one extracted image feature of the at least one first image on the display device.

According to the invention, advantageously, the user of such method and system, such as the driver of a vehicle, may be able to better identify important objects in the provided images, since the provided images, such as grey scale IR images provided from the night vision camera(s), may be enhanced with color which helps distinguishing features, edges and/or objects from each other in the provided images. Accordingly, the user may better distinguish between important and less important features or objects in the images provided by the night vision camera(s). By applying such colorization, for example, the user may easier differentiate between various features in the images. Thus, the user may be provided with an improved vehicular night vision camera system and night assistant driving system, respectively, which helps increasing driving safety.

Preferably, the method and system according to embodiments of the invention are capable of processing any in-coming video streams from a night vision camera and analyzing and processing the video streams using a deep learning technique to colorize the video streams, preferably into a more natural day light color image video stream. Such converted video streams can be visualized by various output devices, such as a head unit display device of a vehicle, camera based mirrors, head up display devices, and/or windshield projections, etc. Preferably, such deep learning technique employs a database or a set of databases which store one or more color features for various image features, such as object segments. Such properties can advantageously be used for a natural colorization process.

The one or more databases could be provided in a standalone environment on the device itself, such as the night vision camera, display device, and/or the vehicle, or could reside on any connected cloud services. According to an embodiment, at least part of at least one of the computing device and database are respectively implemented in one or more computer system resources accessible through the Internet, which preferably implement such cloud services. Such computer system resources may be, for example, implemented in, or may be part of, or may comprise one or more processors, e.g. one or more server computers, or may be a separate component, or may be a distributed system (e.g. connected through the Internet or another network) using one or more processors and/or integrated circuits.

Likewise, the computing device may be, for example, implemented in, or may be part of, or may comprise one or more processors, such as microprocessors. It may be a separate component, such as a processor in a control unit of the vehicle and/or one or more server computers, or may be a distributed system (e.g. connected through the Internet or another network, such as the vehicle communications bus) using one or more processors and/or integrated circuits.

According to another embodiment, at least part of at least one of the computing device and database are respectively comprised in a control unit of the vehicle. For example, such control unit may be, or may be part of, an electronic control unit (so-called ECU) of the vehicle, or a head unit of the vehicle, or both.

According to an embodiment, a colorization of a night vision camera video stream can be improved by using other color image video streams which are fed to the deep learning system if one such camera feeds exits in the system.

Accordingly, in an embodiment of the invention, the method further comprises the steps of receiving, by the computing device, image data of at least one second image (e.g. a color image) captured with at least one daylight camera, which may be particularly a RGB camera, performing by the computing device at least one image recognition process on the received image data of the at least one second image and extracting at least one image feature from the at least one second image, and updating by the computing device the database with the at least one image feature extracted from the at least one second image, wherein the at least one image feature is associated with at least one color.

According to a further embodiment of the invention, the method further comprises the steps of receiving, by the computing device, image data of at least one second image (e.g. a color image) captured with at least one daylight camera, such as a RGB camera, performing by the computing device at least one image recognition process on the received image data of the at least one second image and extracting at least one image feature from the at least one second image. Then, a correlation between the at least one image feature extracted from the at least one second image and the at least one image feature extracted from the at least one first image is determined by the computing device, and based on the determined correlation the database is updated by the computing device with at least one of the correlated image features, wherein the at least one image feature is associated with at least one color.

According to an embodiment, the steps of determining the at least one parameter set in the at least one image recognition process, determining from the database at least one image feature which is associated with at least one color based on the at least one parameter set, and applying the at least one color of the at least one determined image feature to the at least one image feature extracted from the at least one first image are performed by the computing device multiple times, particularly in at least one recursive and/or parallel sequence, for a plurality of image features of the at least one first image. As such, multiple image features of parts or of the whole at least one first image provided by the night vision camera(s) may be colorized.

According to an embodiment, the at least one first image is at least one sequence of first images, preferably the least one sequence of first images is part of a video stream captured with the at least one night vision camera.

According to an embodiment, the computing device includes a processing device which is programmed with an algorithm having a deep learning architecture. Particularly, the computing device includes a processing device which is programmed according to a set of parameters provided from a multi layer neural network.

According to an embodiment, the parameter set is indicative of whether at least one threshold associated with the at least one image property of the at least one first image is exceeded, or not.

Preferably, the computing device further performs a digitized colorizing process applied to at least a part of the at least one first image prior to the determining of the at least one image feature from the database. In such case, the identification of an appropriate feature and associated color from the database can be enhanced if, for example, the computing device cannot determine at least one feature from the database in an initial step.

Accordingly, in an embodiment, the following steps are performed by the computing device in at least one further recursive loop: performing the at least one image recognition process on the digitally colorized at least part of the at least one first image, determining at least one modified parameter set in the at least one image recognition process which is indicative of at least one image property of the digitally colorized at least part of the at least one first image, and determining from the database at least one image feature which is associated with at least one color based on the at least one modified parameter set.

Any aspects and embodiments described herein with respect to the method can equally be employed in the system with the computing device (employing one or more processors, for example) configured by software and/or hardware appropriately.

According to another aspect, there is provided a computer program product comprising software code sections which are configured to perform a method according to the invention as described herein. In particular, such computer program may be implemented in principle in any processing device which is appropriate to perform the respective function. Such processing device may be, for example, implemented in, or part of, one or more processors, e.g. of a vehicle's control unit and/or one or more server computers, or may be a separate component, or may be a distributed system using one or more processors and/or integrated circuits. The computer program may be stored on a computer readable medium.

According to another aspect, there is disclosed a vehicle comprising at least one night vision camera, at least one display device and a system according to the invention as described, wherein at least part of the computing device is coupled with the at least one night vision camera and display device of the vehicle.

According to an embodiment, the at least one night vision camera is or comprises an infrared camera. Particularly, such infrared camera captures images in the infrared spectrum. According to a further embodiment, the at least one daylight camera is or comprises a color camera, particularly a RGB camera. According to a further embodiment, the at least one display device is or comprises a head unit display device of a vehicle, one or more camera based mirrors, a head-up display device, and/or a windshield projection device.

In the above terminology and as used herein below, "first", "second", "third", etc. are not meant to designate any temporal order of actions or occurrences, but are simply used to distinguish different entities, such as the users, vehicles and data from each other.

Aspects of the invention and embodiments will now be described with reference to the following Figures in which
- Fig. 1: shows a schematic view of a vehicle according to an embodiment of the invention,
- Fig. 2: shows a schematic view of a system according to an embodiment of the invention,
- Fig. 3: shows a flow diagram of a method according to an embodiment of the invention,
- Fig. 4: shows a flow diagram of a part of a method according to an embodiment of the invention, as shown in Fig. 3, in greater detail,
- Fig. 5: shows a flow diagram of a further embodiment of a method according to the invention,
- Fig. 6: shows a flow diagram of yet a further embodiment of a method according to the invention.

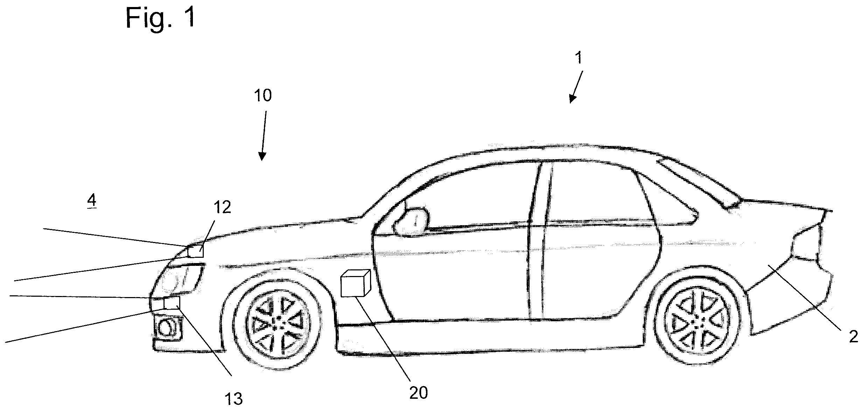

In Fig. 1 there is shown a schematic view of a vehicle according to an embodiment of the invention. The vehicle 1 comprises a vehicle chassis 2 which carries, inter alia, one or more cameras, for example used in respective driving assist systems (not shown) of the vehicle 1. The vehicle 1 comprises one or more cameras 12 which is/are embodied as or comprise a respective night vision camera, e.g. an IR camera. The vehicle 1 further comprises one or more cameras 13 which is/are embodied as or comprise a respective daylight camera, e.g. a RGB camera. The cameras 12 and/or 13 may be installed, for example, in front of the vehicle's engine, e.g. in the vehicle's bumpers and/or radiator grill, as commonly known in the art.

Particularly, the night vision camera(s) 12, which captures infrared images of an environment 4 within an area of the field of view, may be employed with a system 10 providing driving assistance to the vehicle's driver, particularly at reduced light conditions, such as at night. With the aid of such night vision camera(s) 12, a vehicular night assistance driving system may be implemented in the vehicle 1 which is capable of assisting the driver during travels at night such that any obstacles may be recognized earlier since objects in front of the vehicle 1 can be identified easier at night resulting from the captured IR images. The night vision camera(s) 12, like commonly known night vision cameras, delivers video streams in grey scale which can be visualized and displayed on one or more display devices in the vehicle 1.

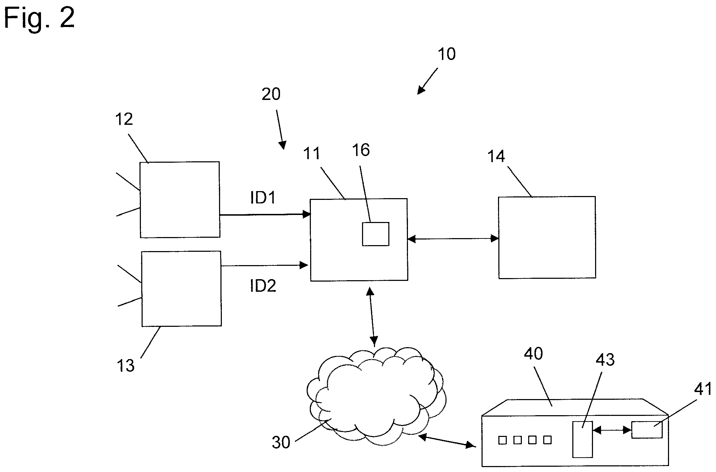

Fig. 2 shows a schematic view of a system 10 and further components of the vehicle 1 according to an embodiment of the invention in greater detail. The system 10 comprises a computing device 11, which may be part of a control unit 20, e.g. an ECU or head unit, of the vehicle 1. The computing device 11 may be, or may comprise one or more processors 16, such as microprocessors, which is programmed to perform the functions as set out in more detail below. The computing device 11 is coupled with the night vision camera(s) 12 and the daylight camera(s) 13 in wired or wirelessly, e.g. through the vehicle's CAN bus. The computing device 11 is further coupled with one or more display devices 14, such as a head unit display device or head-up display, in wired or wirelessly, e.g. also through the vehicle's CAN bus.

As set out in more detail below, a method for colorizing image streams provided by the night vision camera(s) 12 employs one or more databases. In the present embodiment, such database(s) 43 may be part of, or connected with, one or more computer system resources 40 accessible through the Internet 30. For example, the one or more computer system resources 40 or server computers, respectively, may be part of or form a so-called cloud computing infrastructure, which is an IT infrastructure typically established through a computer network and is accessible, for example, through the Internet.

According to another embodiment, not shown in the Figures, the one or more databases 43 may be part of the control unit 20, the camera(s) 12, and/or any other part of the vehicle 1 in a standalone implementation. In the present implementation according to Fig. 2, for example, one or more computer system resources may be formed by one or more server computers 40 which may be located remote from the vehicle 1. The server computer 40 according to Fig. 2 comprises one or more processing devices 41, a memory for storing the one or more databases 43 as described herein, and various other memories for storing various programs or algorithms used with the present invention. For the purposes of the present invention, the processing device 41 may perform some of the steps described herein alone or in combination with any other processing device, such as the processor 16 of the control unit 20.

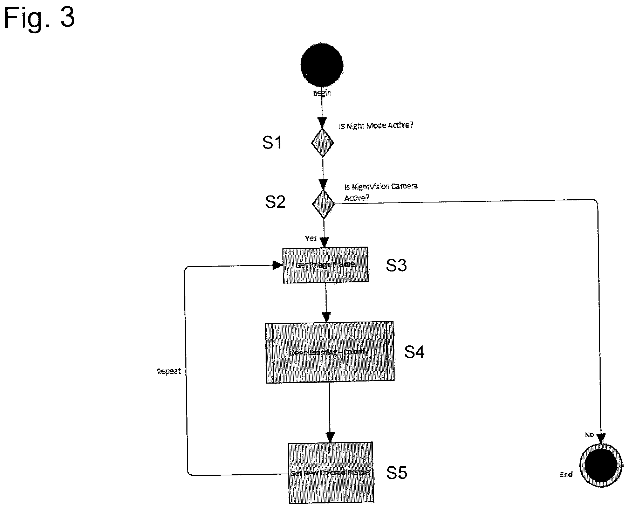

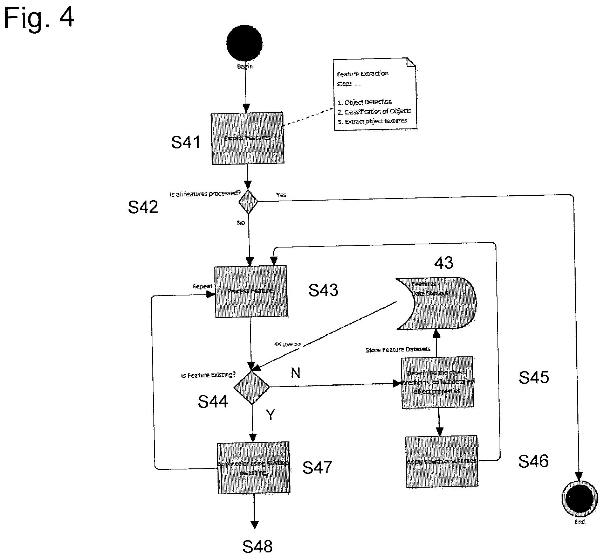

Fig. 3 in combination with Fig. 4 shows a flow diagram of a method according to an embodiment of the invention. In this regard, Fig. 4 shows a flow diagram of a part of the method according to Fig. 3 in greater detail. Particularly, Fig. 3 shows an operational mode of the system 10, which may be performed by the computing device 11 and its processing device 16, respectively.

The method begins with steps S1 and S2 in which it is determined whether the night mode is active and whether a night vision camera is active. If yes, the process proceeds to step S3 in which the computing device 11 receives image data ID1 of at least one first image (preferably, a sequence of first images, i.e. a video stream of first images) captured with the at least one night vision camera 12. Image data of an image are commonly designated as image frame. Thus, the computing device 11 receives an image frame captured with the at least one night vision camera 12. In step S4, the computing device 11 performs at least one image recognition process on a respective image frame received from the at least one night vision camera 12.

With step S4 shown in greater detail in Fig. 4, according to an embodiment, such image recognition process may include extracting at least one feature, as shown in step S41, involving an algorithm for object detection, classification of objects, extracting object textures, etc., as commonly known and employed in various known image recognition processes. In step S42, it is determined whether all features have been processed. If "Yes", the process proceeds to the end, if "No" the process proceeds to step S43 in which the extracted feature is processed. In this and in the following steps S44 and S45, the computing device 11, e.g. in a deep learning process, determines at least one parameter set in the at least one image recognition process which is indicative of at least one image property of at least a part of the received image frame. Generally, the parameter set may be indicative of whether at least one threshold associated with the at least one image property (such as an image feature) of the at least one first image is exceeded, or not. For example, a parameter set is determined which is indicative of whether an extracted feature corresponds to an image feature stored in the database 43. The computing device 11 then determines from the database 43 at least one image feature which is associated with at least one color based on the at least one parameter set. In the particular embodiment, it is determined whether the extracted feature is existing in the database 43 (step S44). If "No", the process proceeds to step S45 in order to determine any object thresholds and/or collect detailed object properties. According to this information found in step S45, feature datasets stored in database 43 can be enhanced with this information, so that it can be determined in step S44 again whether a corresponding feature is existing in the database 43.

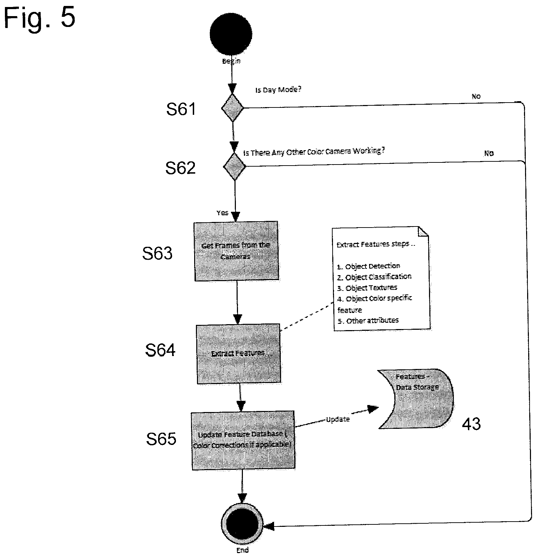

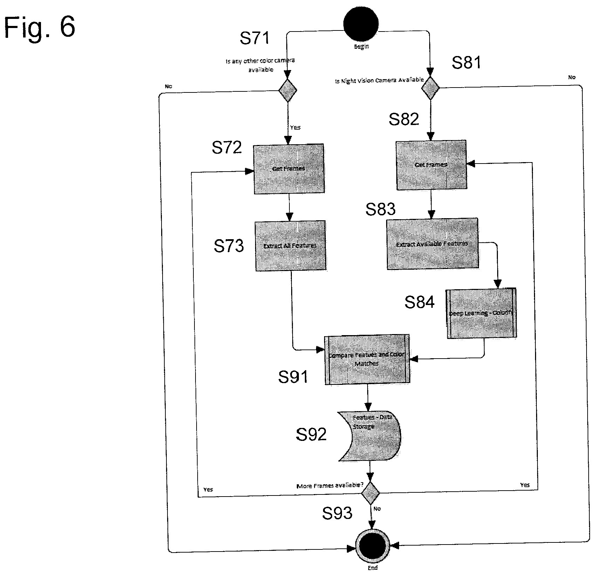

If "Yes" in step S44 is determined, i.e. a corresponding feature is found in the database 43, the process proceeds to step S47 in which the computing device 11 applies the at least one color, which is associated with the respective determined image feature from the database 43, to the at least one image feature extracted from the image frame received from the night vision camera 12. In this way, the at least one image feature extracted from the image frame may be "colorized" with one or more colors determined from the database according to corresponding "pre-analyzed" or "pre-learned" features stored in the database 43. As set out in more detail below, the features may be pre-analyzed or pre-learned in the database 43 with respect to their color(s) in a training mode using one or more color images (Fig. 5) and/or in a combined incremental update mode using cross verifications between color images and "colorized" night vision camera images (Fig. 6). The steps S43, S44, S45 and S47 may be repeated in a respective recursive loop, or performed in respective parallel processes (e.g. when employing multiple processor cores), multiple times for each respective image feature extracted from the received image frame in step S41.

In step S48, for example after buffering a certain amount of features colorized according to step S47, the computing device 11 then displays the "colorized" received image frame with the at least one color applied to the respective extracted image features on the display device 14.

One the other hand, if step S45 is unsuccessful and any object thresholds cannot be determined or detailed object properties cannot be collected, the process proceeds to step S46. In step S46, the computing device 11 performs a digitized colorizing process applied to at least a part of the received image frame prior to the determining of the at least one image feature from the database 43. For example, a commonly known digital colorizing process may be performed, as known in the art ("apply new color schemes" in step S46). In principle, any known processes that add (at least some) color to the image frame or parts thereof, e.g. by analyzing and processing the grey scaled features using some kind of pattern recognition, can be employed. The purpose of such color application or enhancement is to better work out any feature characteristics which can be used in steps S44 or S45 to determine a corresponding image feature in the database 43.

Particularly, the computing device 11 generally performs after step S46 in at least one further recursive loop, e.g. of a deep learning algorithm, in the steps S43, S44 and S45 the performing of another image recognition process on the digitally colorized part of the received image frame, determining at least one modified parameter set in the at least one image recognition process which is indicative of at least one image property of the digitally colorized part of the image frame, and determining from the database 43 at least one image feature and its associated color based on the modified parameter set.

Thus, in an operation mode as described in an exemplary embodiment according to Figs. 3 and 4, the system 10 may convert the night vision camera output (typically a greyscale image stream) into corresponding daylight images using a features data set database along with deep-learning methodology.

Fig. 5 shows a flow diagram of a further embodiment of a method according to the invention. The method as shown in this embodiment may be used as a training mode for a deep learning algorithm according to aspects of the invention. This mode is available, for example, if the vehicle 1 comprises additional color camera(s). In this mode the system 10 may extract various kinds of features like detected object properties, classificating those objects, extracting various object features like textures, size, location, etc. It may also collect associated color information, and update the existing features data set in the database 43 with this information.

The method in this mode employs the use of at least one second camera, like the one or more daylight cameras 13 as shown in Figs. 1 and 2. The daylight camera(s) 13 may be coupled with the computing device 11 like the camera(s) 12 as explained above. An idea behind this embodiment is that a colorization of the night vision camera image frame(s) can be improved by using other color image video streams which are fed to the deep learning system if one such camera feeds exits in the system.

According to Fig. 5, in steps S61 and S62 the process determines if day mode is active and if there is any other color camera available and working. If "Yes", then the process proceeds to step S63 in which the computing device 11 receives image data (image frames) ID2 of at least one second image (which is preferably an image stream) captured with the one or more daylight cameras 13. In step S64, the computing device 11 performs at least one image recognition process on the received image data ID2 and extracts at least one image feature from the respective image frames. This may include object detection, object classification, detecting object textures, object color specific features, and/or other attributes. In step S65, the database 43 is updated by the computing device 11 with the at least one extracted image feature which is associated with at least one color. If applicable, color corrections may be made with the updating process.

Fig. 6 shows a flow diagram of a further embodiment of a method according to the invention, which preferably combines the training mode according to Fig. 5 with the operational mode according to Figs. 3 and 4. For example, the steps S71 to S73 are related to a training mode using one or more color cameras, whereas the steps S81 to S84 are related to an operational mode when receiving image frames from one or more night vision cameras. In this mode, the system 10 performs both the normal operational and the training mode process to get the color images generated from the normal operational mode and get the generated feature sets like in the training mode. The results are compared with each other and any color correction details are applied to the feature data set stored in the database.

Particularly, in step S71 a determination is made if there is any (other) color camera (such as camera 13) available. If "no", the process related to the training mode comes to an end, if "Yes", the process proceeds to step S72. The steps S72 and S73 correspond to steps S63 and S64 according to Fig. 5, thus will not be explained in detail again. In step S81, a determination is made if there is any night vision camera (such as camera 12) available. If "no", the process related to the operational mode comes to an end, if "Yes", the process proceeds to step S82. The steps S82, S83 and S84 correspond to steps S3 and S41 to S47 according to Figs. 3 and 4, thus will not be explained in detail again.

In step S91, the computing device 11 determines a correlation between the at least one image feature extracted from the color image frame(s) in step S73 and the at least one image feature extracted from the night vision camera image frame(s). According to an embodiment, the correlation may be determined with regard to any characteristics of the image features, e.g. regarding classification, texture, location in the image, and any other attributes, and with regard to color matches. In step S92, the database 43 is updated with at least one of the correlated image features, wherein the stored image feature is associated with at least one color based on the determined correlation. In step S93, a determination is made as to whether further image frames are available. If "Yes", the process recurs back to steps S72 and S82, respectively, if "No" the process proceeds to the end. In this embodiment, advantageously, an incremental update of features in the database 43 using cross verifications between features in the color images and the "colorized" night vision camera images may be established. The training mode according to Fig. 5 may also be combined with an incremental update mode according to Fig. 6.

Preferably, the method and system according to embodiments of the invention are capable of processing any in-coming video streams from a night vision camera and analyzing and processing the video streams using a deep learning technique to colorize the video streams. Deep learning is a technique in which observed data are generated by interactions of layered factors on the provided input data. In the present invention, the input video stream frame(s) may be processed at once into various neurons (algorithmic sub modules), in which each neuron will be looking for a set of factors or parameters.

An advantage of using deep learning is that multi-frames may be processed. For example, multiple frames may be processed at once (typically, an IR camera produces about 25 fps onwards). In addition, the process is scalable, which means that it is able to add more neurons without changing the current running at once. Further, multiple sets of neurons could run in parallel in different environments, for example, in multiple-CPUs architectures and environments with multiple CPUs, GPUs, cloud servers, dedicated servers, etc. It further provides advantages regarding accuracy and performance. The accuracy of result and performance grows with the amount of input data. That is, if more learning data are provided, then accuracy increases and performance improves.

Embodiments of the invention overcome the disadvantage that the end-user (such as the driver of a vehicle) often makes mistakes because they cannot identify important features, which are thus not recognized, since camera feeds from night vision cameras are typically grey scale images. With applying a colorization as described herein, one could differentiate various features easier. For example, camera based mirror image feeds may account for less driver distractions. Another example is increasing driver safety in low visibility conditions, such as rain, fog, heavy snow or darkness.

## Claims

1. A method of displaying image data from at least one night vision camera (12) of a vehicle (1) on at least one display device (14) disposed in the vehicle (1), comprising:
- receiving, by a computing device (11) comprising a processor (16), image data (ID1) of at least one first image captured with the at least one night vision camera (12) for displaying on the display device (14),
- performing, by the computing device (11), at least one image recognition process on the received image data (ID1) of the at least one first image,
- determining, by the computing device (11), at least one parameter set in the at least one image recognition process which is indicative of at least one image property of at least a part of the at least one first image,
- determining, by the computing device (11), from at least one database (43) at least one image feature which is associated with at least one color based on the at least one parameter set,
- applying, by the computing device (11), the at least one color of the at least one determined image feature to at least one image feature extracted from the at least one first image, and
- displaying, by the computing device (11), the at least one first image with the at least one color applied to the at least one extracted image feature of the at least one first image on the display device (14).

2. The method according to claim 1, wherein the steps of determining the at least one parameter set in the at least one image recognition process, determining from the database (43) at least one image feature which is associated with at least one color based on the at least one parameter set, and applying the at least one color of the at least one determined image feature to the at least one image feature extracted from the at least one first image are performed by the computing device (11) multiple times, particularly in at least one of a recursive and parallel sequence, for a plurality of image features of the at least one first image.

3. The method according to one of claims 1 to 2, wherein the at least one first image is at least one sequence of first images, preferably the least one sequence of first images is part of a video stream captured with the at least one night vision camera (12).

4. The method according to one of claims 1 to 3, wherein the computing device (11) includes a processing device (16) which is programmed with an algorithm having a deep learning architecture.

5. The method according to one of claims 1 to 4, wherein the computing device (11) includes a processing device (16) which is programmed according to a set of parameters provided from a multi layer neural network.

6. The method according to one of claims 1 to 5, wherein the parameter set is indicative of whether at least one threshold associated with the at least one image property of the at least one first image is exceeded, or not.

7. The method according to one of claims 1 to 6, further comprising performing, by the computing device (11), a digitized colorizing process applied to at least a part of the at least one first image prior to the determining of the at least one image feature from the database (43).

8. The method according to claim 7, further comprising the following steps performed by the computing device (11) in at least one further recursive loop:
- performing the at least one image recognition process on the digitally colorized at least part of the at least one first image,
- determining at least one modified parameter set in the at least one image recognition process which is indicative of at least one image property of the digitally colorized at least part of the at least one first image, and
- determining from the database (43) at least one image feature which is associated with at least one color based on the at least one modified parameter set.

9. The method according to one of claims 1 to 8, further comprising
- receiving, by the computing device (11), image data (ID2) of at least one second image captured with at least one daylight camera (13),
- performing, by the computing device (11), at least one image recognition process on the received image data (ID2) of the at least one second image and extracting at least one image feature from the at least one second image,
- updating, by the computing device (11), the database (43) with the at least one image feature extracted from the at least one second image associated with at least one color.

10. The method according to one of claims 1 to 9, further comprising
- receiving, by the computing device (11), image data (ID2) of at least one second image captured with at least one daylight camera (13),
- performing, by the computing device (11), at least one image recognition process on the received image data (ID2) of the at least one second image and extracting at least one image feature from the at least one second image,
- determining, by the computing device (11), a correlation between the at least one image feature extracted from the at least one second image and the at least one image feature extracted from the at least one first image, and
- updating, by the computing device (11), the database (43) with at least one of the correlated image features associated with at least one color based on the determined correlation.

11. A computer program product comprising software code sections which are adapted to perform a method according to one of the preceding claims when loaded into an internal memory of a computing device (11).

12. A system (10) for displaying image data from at least one night vision camera (12) of a vehicle (1) on at least one display device (14) disposed in the vehicle (1), the system (10) comprising
- a computing device (11) comprising a processor (16), wherein the computing device (11) is configured to:
- receive image data (ID1) of at least one first image captured with the at least one night vision camera (12) for displaying on the display device (14),
- perform at least one image recognition process on the received image data (ID1) of the at least one first image,
- determine at least one parameter set in the at least one image recognition process which is indicative of at least one image property of at least a part of the at least one first image,
- determine from at least one database (43) at least one image feature which is associated with at least one color based on the at least one parameter set,
- apply the at least one color of the at least one determined image feature to at least one image feature extracted from the at least one first image, and
- display the at least one first image with the at least one color applied to the at least one extracted image feature of the at least one first image on the display device (14).

13. The system according to claim 12, wherein at least part of at least one of the computing device (11) and database (43) are respectively implemented in one or more computer system resources (40) accessible through the Internet (30).

14. The system according to claim 12 or 13, wherein at least part of at least one of the computing device (11) and database (43) are respectively comprised in a control unit (20), preferably in at least one of an ECU and a head unit, of the vehicle (1).

15. A vehicle (1) comprising at least one night vision camera (12), at least one display device (14) and a system (10) according to one of claims 12 to 14, wherein at least part of the computing device (11) is coupled with the at least one night vision camera (12) and display device (14) of the vehicle.
